# FASCICULE DE BREVET EUROPEEN

(11) **EP 3 676 540 B1**
(45) Date de publication et mention de la délivrance du brevet: **25.01.2023**
(21) Numéro de dépôt: 18812241.0
(22) Date de dépôt: 07.11.2018
(51) Int. Cl.: F24H 3/00, H05B 3/00, H01M 10/627, H01M 10/615, H01M 10/6562, H01M 50/213, H01M 50/264

(54) **APPAREIL DE CHAUFFAGE INTÉGRANT UNE BATTERIE IMPLANTÉE DANS LE FLUX D'AIR FRAIS ENTRANT**
HEIZAPPARAT MIT PLAZIERTER BATTERIE IM HINDURCHTRETENDEN FRISCHLUFTFLUSS
HEATING APPARATUS COMPRISING A BATTERY INSTALLED WITHIN THE ENTRY FRESH AIR FLOW

(30) Priorité: 16.11.2017 FR 1760818
(43) Date de publication de la demande: 08.07.2020
(73) Titulaire: Lancey Energy Storage, 38000 Grenoble (FR)
(72) Inventeur: CHATILLON, Yohann, 38430 St jean de moirans (FR); MEYER, Raphaël, 38000 Grenoble (FR); MOREAU, Gilles, 38000 Grenoble (FR)
(74) Mandataire: Germain Maureau
(86) Numéro de dépôt international: PCT/FR2018/052745
(87) Numéro de publication internationale: WO 2019/097138

(56) Documents cités:
- WO-A1-2012/013789
- FR-A1- 2 882 132
- FR-A1- 3 044 512
- GB-A- 2 490 897

## Description

La présente invention concerne un appareil de chauffage de type radiateur électrique ayant un boîtier renfermant d'une part un dispositif de stockage d'énergie électrique fonctionnant sous un courant continu destiné à être chargé par une source d'alimentation électrique extérieure à l'appareil, d'autre part au moins un organe de chauffe pouvant être alimenté en électricité par la source d'alimentation électrique et/ou par le dispositif de stockage d'énergie électrique.

Dans certains appareils de chauffage, il est connu d'intégrer au moins une batterie associée à l'organe de chauffe. Une telle batterie permet de stocker de l'énergie électrique utilisée par l'appareil de chauffage, en vue d'espacer la consommation d'électricité dans le temps.

En dépit de tous les avantages que ces solutions peuvent présenter en termes de gestion de l'énergie électrique, ces solutions ne donnent pas encore une entière satisfaction.

En effet, la batterie comporte, de manière connue, une enveloppe de protection sous la forme d'un boîtier qui permet de maintenir et de protéger les éléments internes de la batterie, permettant à l'ensemble d'être manipulé d'un seul bloc. Une telle enveloppe de protection a souvent une propriété d'isolation thermique et a donc pour effet secondaire de confiner la chaleur produite par les éléments internes, notamment les cellules, lors du fonctionnement de la batterie. Cela génère une augmentation de la température interne des éléments, notamment les cellules, et impacte négativement la durée de vie de la batterie. En plus de confiner la chaleur à l'intérieur de la batterie, l'enveloppe de protection retarde également le moment où la chaleur produite par la batterie est valorisée en termes de production de chaleur.

Par ailleurs, l'organisation générale connue qui implémente une telle enveloppe de protection rend l'industrialisation de l'appareil de chauffage sensiblement complexe et onéreuse, ce qui peut être problématique à grande échelle.

Le document GB 2490897 A, considéré comme l'art antérieur le plus proche, décrit un radiateur avec des lampes de chauffage dont la chaleur rayonnée est évacuée par une grille de sortie. Le boîtier comprend des entrées pour autoriser l'air à circuler pour permettre un chauffage par convection. Les entrées sont agencées sur les faces latérales, à mi-hauteur du boitier. Le boitier comprend un panneau amovible 8 pour permettre de remplacer des batteries et un panneau amovible 9 pour permettre le changement des lampes 2. L'énergie électrique ne provient pas du secteur: les lampes 2 dérivent leur énergie des panneaux photovoltaïques ou de cellules, qui chargent aussi les batteries.

La présente invention a pour but de résoudre tout ou partie des inconvénients mentionnés ci-dessus.

Dans ce contexte, un objectif est de fournir un appareil de chauffage répondant à au moins l'un des objectifs suivants :
- maintenir la durée de vie des composants électriques la plus élevée possible,
- présenter un rendement aussi élevé que possible,
- présenter une industrialisation aisée et à moindre coût.

Cet objectif peut être atteint grâce à la fourniture d'un appareil de chauffage de type radiateur électrique ayant un boîtier renfermant d'une part un dispositif de stockage d'énergie électrique fonctionnant sous un courant continu destiné à être chargé par une source d'alimentation électrique extérieure à l'appareil, d'autre part au moins un organe de chauffe pouvant être alimenté en électricité par la source d'alimentation électrique et/ou par le dispositif de stockage d'énergie électrique, le boîtier comprenant au moins une admission d'air agencée dans une partie inférieure du boîtier pour permettre à de l'air d'entrer dans le volume délimité intérieurement par le boîtier et au moins une sortie d'air agencée dans une partie supérieure du boîtier pour permettre à l'air de sortir hors dudit volume, le dispositif de stockage d'énergie électrique étant implanté en travers du flux d'air qui circule, dans ledit volume, de ladite au moins une admission d'air vers ladite au moins une sortie d'air, à un emplacement situé, vu dans le sens de circulation dudit flux, entre d'une part ladite au moins une admission d'air et d'autre part ledit au moins un organe de chauffe.

L'appareil de chauffage peut également répondre aux caractéristiques techniques présentées ci-après, prises isolément ou en combinaison.

Ladite au moins une admission d'air comprend une ouverture aménagée dans la face arrière du boîtier.

Le dispositif de stockage d'énergie électrique comprend une batterie à base d'un assemblage de cellules électrochimiques.

Le boîtier renferme deux plaques opposées encadrant les cellules électrochimiques de part et d'autre de celles-ci suivant une direction selon laquelle l'épaisseur du boîtier est comptée.

Le flux d'air qui circule de ladite au moins une admission d'air vers ledit au moins un organe de chauffe circule dans l'intervalle délimité entre et par lesdites deux plaques opposées.

Les cellules électrochimiques sont en contact thermique direct avec le flux d'air qui circule de ladite au moins une admission d'air vers ledit au moins un organe de chauffe.

Le boîtier et le dispositif de stockage d'énergie électrique délimitent respectivement des premiers éléments et des seconds éléments d'un même système de fixation assurant le maintien du dispositif de stockage d'énergie électrique audit emplacement par rapport au boîtier.

Le flux d'air circule par effet de convection naturelle dans le boîtier.

L'invention sera encore mieux comprise à l'aide de la description détaillée qui est exposée ci-dessous en regard des figures annexées dans lesquelles :
- la figure 1 représente de manière schématique une vue en coupe latérale d'un premier exemple d'appareil de chauffage selon l'invention ;
- la figure 2 représente de manière schématique une vue en coupe latérale d'un deuxième exemple d'appareil de chauffage selon l'invention ;
- la figure 3 représente une vue de face en coupe de l'appareil de chauffage de la figure 2 ;
- la figure 4 représente une partie d'un exemple de dispositif de stockage d'énergie électrique utilisable pour les appareils des figures 1 à 3 ;
- la figure 5 représente en perspective l'appareil de chauffage de la figure 2 ;
- la figure 6 représente en perspective le dispositif de stockage d'énergie dans son ensemble ;
- la figure 7 représente un premier mode de réalisation du dispositif de stockage d'énergie ;
- les figures 8 et 9 montrent un deuxième mode de réalisation du dispositif de stockage d'énergie.

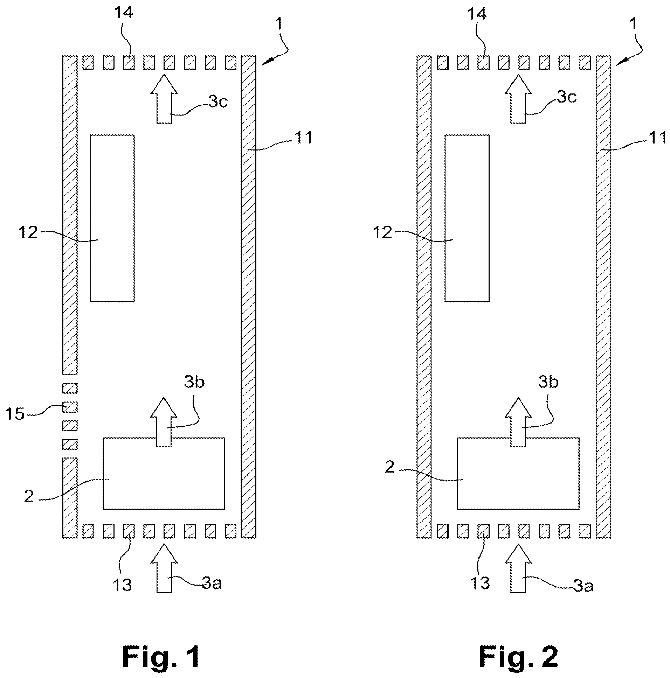

Comme illustré sur la figure 1, l'appareil de chauffage 1 de type radiateur électrique comprend un boîtier 11 renfermant d'une part un dispositif de stockage d'énergie électrique 2 fonctionnant sous un courant continu destiné à être chargé par une source d'alimentation électrique extérieure à l'appareil de chauffage 1 et d'autre part au moins un organe de chauffe 12 pouvant être alimenté en électricité par la source d'alimentation électrique et/ou par le dispositif de stockage d'énergie électrique 2.

Le boîtier 11 est typiquement constitué d'une carcasse formée dans un matériau métallique.

La source d'alimentation électrique à laquelle l'appareil de chauffage 1 est destiné à être raccordé peut par exemple délivrer une tension électrique alternative. Il s'agit typiquement du réseau électrique local.

Alternativement ou de manière combinée, la source d'alimentation électrique peut être configurée de sorte à alimenter l'appareil de chauffage 1 avec une tension électrique continue. C'est par exemple le cas avec des sources d'énergie à base d'énergie renouvelable, typiquement des panneaux photovoltaïques, des piles à combustible, des supercapacités ou des batteries à base de cellules électrochimiques.

La présence d'un tel dispositif de stockage d'énergie électrique 2 a pour but de pouvoir stocker de l'énergie électrique au sein de l'appareil de chauffage 1, notamment lorsque de l'énergie électrique peu chère et/ou à base d'énergie renouvelable est disponible.

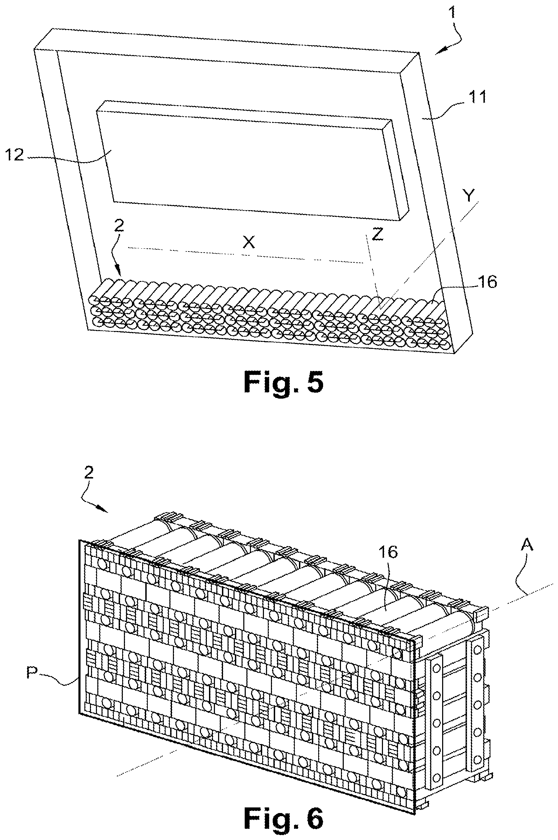

Selon un mode de réalisation non limitatif, le dispositif de stockage d'énergie électrique 2 comprend une batterie à base d'un assemblage de cellules électrochimiques 16, illustré par la figure 6. En particulier, cet assemblage peut comprendre des premiers éléments d'assemblage permettant d'assembler une pluralité de cellules électrochimiques 16 entre elles de sorte à constituer une rangée horizontale et des seconds éléments d'assemblage permettant d'assembler verticalement plusieurs rangées entre elles. La nature et la conception des premiers et seconds éléments d'assemblage ne sont pas limitatives en soi.

Le dispositif de stockage d'énergie électrique 2 peut également comprendre, alternativement ou en combinaison avec une batterie telle que détaillée ci-avant, un supercondensateur et/ou une pile à combustible.

Le boîtier 11 comprend au moins une admission d'air agencée dans une partie inférieure du boîtier 11 pour permettre à un flux d'air 3a extérieur au boîtier 11 d'entrer dans le volume délimité intérieurement par le boîtier 11. A titre d'exemple, ladite au moins une admission d'air peut comprendre une ouverture 13 ménagée dans la face inférieure du boîtier 11, le flux d'air 3a extérieur à l'appareil de chauffage 1 pouvant pénétrer dans le volume intérieur du boîtier 11 à travers cette ouverture 13. Typiquement, cette ouverture 13 peut se présenter sous la forme d'une grille.

Le boîtier 11 comprend également au moins une sortie d'air 14 agencée dans une partie supérieure du boîtier 11 pour permettre à un flux d'air 3c de sortir hors du volume délimité intérieurement par le boîtier 11. A titre d'exemple, ladite au moins une sortie d'air 14 comprend une ouverture ménagée dans la face supérieure du boîtier 11, le flux d'air 3c intérieur à l'appareil de chauffage 1 et préalablement chauffé par ledit au moins un organe de chauffe 12 pouvant sortir hors du volume intérieur du boîtier 11 à travers cette ouverture. Typiquement, cette ouverture peut se présenter sous la forme d'une grille.

Il ressort de ce qui précède qu'un certain flux d'air 3a extérieur à l'appareil de chauffage 1 peut pénétrer dans le boîtier 11, à travers ladite au moins une admission d'air, afin d'être chauffé à l'intérieur du boîtier 11. Après avoir pénétré dans le boîtier 11, le flux d'air circulant entre ladite au moins une admission d'air et l'organe de chauffe 12 et destiné à être chauffé par ledit au moins un organe de chauffe 12 est repéré 3b. Le flux d'air qui circule entre l'organe de chauffe 12 et ladite au moins une sortie d'air 14, après avoir subi une chauffe par l'organe de chauffe 12 est destiné à sortir hors du boîtier 11 via ladite au moins une sortie d'air 14, correspond quant à lui au flux d'air 3c.

Avantageusement, le dispositif de stockage d'énergie électrique 2 est implanté en travers du flux d'air 3b, 3c qui circule, dans le volume intérieur du boîtier 11, de ladite au moins une admission d'air vers ladite au moins une sortie d'air 14.

Plus précisément, le dispositif de stockage d'énergie électrique 2 est implanté, par rapport au boîtier 11, à un emplacement situé, vu dans le sens de circulation du flux 3b, 3c, entre d'une part ladite au moins une admission d'air et d'autre part ledit au moins un organe de chauffe 12. Autrement dit, le dispositif de stockage d'énergie électrique 2 est implanté en travers du flux d'air 3b qui circule de ladite au moins une admission d'air vers ledit au moins un organe de chauffe 12.

Dans un mode de réalisation non limitatif mais néanmoins très avantageux, correspondant au premier exemple de la figure 1, ladite au moins une admission d'air comprend, outre l'ouverture 13 aménagée dans la face inférieure du boîtier 11, une ouverture 15 aménagée dans la face arrière du boîtier 11. Cette ouverture 15 permet au flux d'air chauffé par l'organe de chauffe 12 de sortir hors du boîtier 11 en cas d'obturation de ladite au moins une sortie d'air 14.

Cette ouverture 15 permet d'éviter la surchauffe éventuelle de l'organe de chauffe 12 et également de limiter les risques de surchauffe éventuels du dispositif de stockage d'énergie électrique 2, pour éviter une dégradation et une diminution de la durée de vie dudit dispositif de stockage d'énergie électrique.

Il reste toutefois que cette ouverture 15 est facultative et le deuxième exemple d'appareil de chauffage 1 selon l'invention illustré schématiquement sur la figure 2 est dépourvu d'une telle ouverture 15.

Ledit au moins un organe de chauffe 12 peut notamment comprendre au moins un corps de chauffe rayonnant et/ou au moins un dispositif de chauffage par fluide caloporteur. Un tel corps de chauffe rayonnant peut comprendre au moins une résistance électrique destinée à être alimentée par une tension continue, par exemple de l'ordre de 50V. Le corps de chauffe rayonnant peut également comprendre en plus une résistance destinée à être alimentée par une tension alternative, par exemple de 230V, permettant d'utiliser en conjonction les deux types de sources de chauffe pour obtenir un effet de chaleur ponctuel pour compenser des réductions thermiques, par exemple des réductions de nuit ou de jour.

Il est très avantageux de prévoir que les cellules électrochimiques 16 soient en contact thermique direct avec le flux d'air 3b qui circule de ladite au moins une admission d'air vers ledit au moins un organe de chauffe 12.

Le contact thermique des cellules électrochimiques 16 avec le flux d'air 3b permet d'abord de remplir une première fonction consistant à réchauffer le flux d'air 3b avant qu'il ne parvienne à l'organe de chauffe 12, permettant de favoriser le rendement de l'appareil de chauffage 1 en évitant les pertes thermiques internes.

Le contact thermique des cellules électrochimiques 16 avec le flux d'air 3a permet de remplir une deuxième fonction consistant à refroidir les cellules électrochimiques 16 par transfert thermique des calories des cellules électrochimiques 16 vers le flux d'air 3b, ce qui a en partie pour conséquence de maintenir les cellules électrochimiques 16 à une température proche de celle du flux d'air 3a et ainsi de prolonger leur durée de vie.

Il est donc constaté qu'il y a une véritable synergie avantageuse entre ces deux fonctions.

Ainsi l'intégration du dispositif de stockage d'énergie électrique 2, avantageusement dépourvu d'enveloppe de protection contrairement à l'état de la technique, directement au boîtier 11 qui renferme également ledit au moins un organe de chauffe 12 permet une industrialisation facilitée et économique de l'appareil de chauffage 1.

Ces dispositions, bien qu'avantageuses, ne sont toutefois pas limitatives. En effet, il est possible de prévoir que le dispositif de stockage d'énergie électrique 2 soit pourvu d'une enveloppe au moins partiellement ouverte afin de laisser passer le flux d'air.

Avantageusement, le boîtier 11 renferme deux plaques opposées encadrant les cellules électrochimiques 16 de part et d'autre de celles-ci suivant une direction (notée Y sur la figure 5) selon laquelle l'épaisseur du boîtier 11 est comptée.

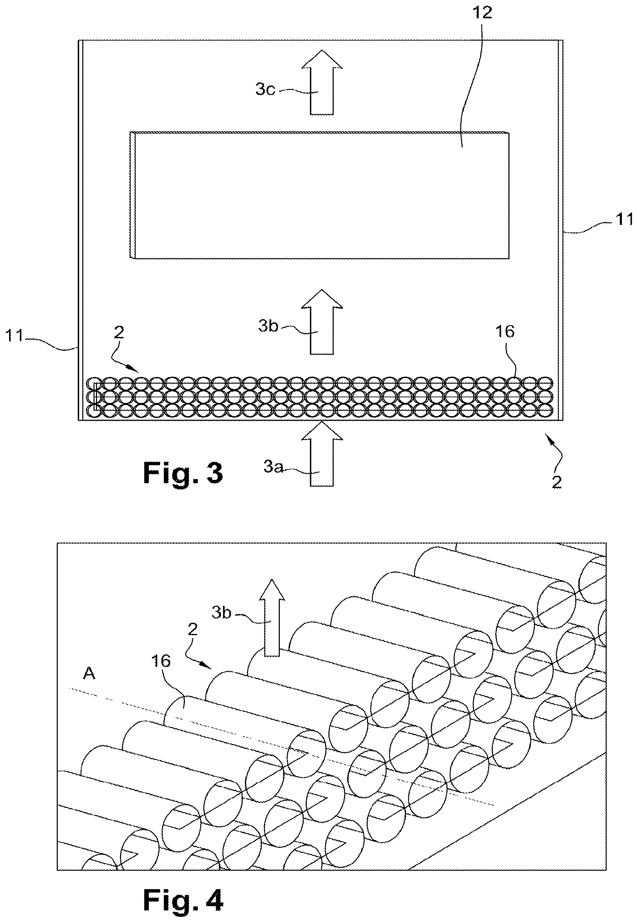

Comme illustré sur la figure 3, le flux d'air 3b qui circule de ladite au moins une admission d'air vers ledit au moins un organe de chauffe 12 circule dans l'intervalle délimité entre, et par, les deux plaques opposées comprises dans le boîtier 11.

Ainsi, de telles plaques opposées ont pour avantages d'assurer une protection des cellules électrochimiques 16 et de guider le flux d'air 3b, pour une meilleure efficacité de l'appareil de chauffage 1 et une bonne robustesse.

Selon un mode de réalisation, comme illustré sur les figures 4 et 6, chaque cellule électrochimique 16 peut se présenter sous la forme d'un cylindre dont l'axe A est perpendiculaire au plan P de référence défini par l'une des deux plaques opposées. Une telle orientation des cellules 16, globalement perpendiculairement à la direction (notée Z) de circulation du flux d'air 3b avec lequel elles sont en contact thermique, favorise la qualité de cet échange thermique de manière simple, efficace et économique. Typiquement, la direction Z correspond à la direction verticale une fois que l'appareil de chauffage est fixé au mur.

Dans la variante représentée, les cellules électrochimiques 16 sont échelonnées, au sein d'une même rangée horizontale, selon une direction notée X conjointement perpendiculaire à Z et à Y. L'empilement vertical des rangées verticales les unes sur les autres se pratique suivant la direction Z.

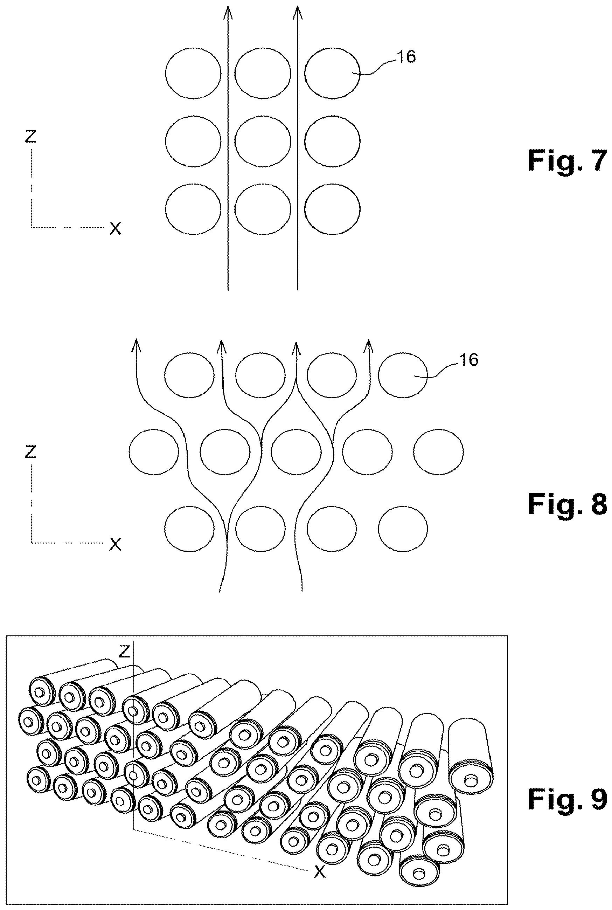

Dans un premier mode de réalisation de la figure 7, les rangées horizontales de cellules 16 sont empilées selon Z de sorte que les cellules électrochimiques 16 soient alignées selon la direction Z d'une rangée horizontale à l'autre. Il en résulte que l'écoulement de l'air frais entre les cellules électrochimiques 16 est relativement rectiligne selon la direction Z, limitant les pertes de charge. Cet écoulement est symbolisé par les flèches verticales sur la figure 7.

Dans le deuxième mode de réalisation des figures 8 et 9, les rangées horizontales de cellules 16 sont empilées selon Z de sorte que, d'une rangée horizontale à l'autre, les cellules électrochimiques 16 soient décalées selon la direction X, aboutissant finalement à une répartition des cellules en quinconce. Cela a pour effet avantageux d'engendrer des déviations pour le flux d'air, symbolisées par les flèches en zigzag sur la figure 8, ce qui permet au final de créer des turbulences dans le flux d'air afin d'améliorer les échanges thermiques entre l'air et les cellules 16.

Ces dispositions très avantageuses ne sont toutefois pas limitatives car l'orientation de l'axe A des cellules 16 peut être quelconque par rapport à la direction de circulation du flux d'air 3b, par exemple en étant orientée parallèlement au plan P de référence, ce qui a pour avantage de rendre l'épaisseur de l'appareil de chauffage potentiellement faible.

Il convient de préciser que les flux d'air 3b, 3c circulent naturellement dans le boîtier 11, c'est-à-dire, sans système de dépression ou de surpression. Le flux d'air circule au contraire par effet de convection naturelle dans le boîtier 11 provenant de la chaleur dégagée par l'organe de chauffe 12 ainsi que par le dispositif de stockage d'énergie électrique 2.

De manière non représentée en détails, le boîtier 11 et le dispositif de stockage d'énergie électrique 2 délimitent respectivement des premiers éléments et des seconds éléments d'un même système de fixation assurant le maintien du dispositif de stockage d'énergie électrique 2 audit emplacement par rapport au boîtier 11. Ce système de fixation peut fonctionner sur des principes d'encliquetage, de vissage ou équivalent.

Ainsi, il résulte de ce qui précède que l'appareil de chauffage 1 permet de maintenir la durée de vie du dispositif de stockage d'énergie électrique 2 la plus élevée possible, que ce soit en fonctionnement normal grâce au transfert thermique avec le flux d'air circulant dans le boîtier ou en fonctionnement critique en cas d'échauffement anormal.

D'autre part, l'appareil de chauffage 1 présente un rendement aussi élevé que possible en raison de la limitation des pertes thermiques internes du fait de la récupération utile des calories générées par le dispositif de stockage d'énergie électrique 2 durant son fonctionnement.

Enfin, l'utilisation d'un dispositif de stockage d'énergie électrique 2 implanté de sorte à favoriser le transfert thermique avec le flux d'air circulant entre l'admission d'air et l'organe de chauffe, et avantageusement dépourvu d'enveloppe de protection contrairement à des techniques connues, favorise une industrialisation de l'appareil de chauffage 1 aisée et économique.

## Revendications

1. Appareil de chauffage (1) de type radiateur électrique ayant un boîtier (11) renfermant d'une part un dispositif de stockage d'énergie électrique (2) fonctionnant sous un courant continu destiné à être chargé par une source d'alimentation électrique extérieure à l'appareil (1), d'autre part au moins un organe de chauffe (12) pouvant être alimenté en électricité par la source d'alimentation électrique et/ou par le dispositif de stockage d'énergie électrique (2), le boîtier (11) comprenant au moins une admission d'air (13, 15) agencée dans une partie inférieure du boîtier (11) pour permettre à de l'air d'entrer dans le volume délimité intérieurement par le boîtier (11) et au moins une sortie d'air (14) agencée dans une partie supérieure du boîtier (11) pour permettre à l'air de sortir hors dudit volume, **caractérisé en ce que** le dispositif de stockage d'énergie électrique (2) est implanté en travers du flux d'air (3b) qui circule, dans ledit volume, de ladite au moins une admission d'air (13, 15) vers ladite au moins une sortie d'air (14), à un emplacement situé, vu dans le sens de circulation dudit flux (3b), entre d'une part ladite au moins une admission d'air (13, 15) et d'autre part ledit au moins un organe de chauffe (12).

2. Appareil de chauffage (1) selon la revendication 1, **caractérisé en ce que** ladite au moins une admission d'air (13, 15) comprend une ouverture (15) aménagée dans la face arrière du boîtier (11).

3. Appareil de chauffage (1) selon l'une quelconque des revendications 1 ou 2, **caractérisé en ce que** le dispositif de stockage d'énergie électrique (2) comprend une batterie à base d'un assemblage de cellules électrochimiques (16).

4. Appareil de chauffage (1) selon la revendication 3, **caractérisé en ce que** le boîtier (11) renferme deux plaques opposées encadrant les cellules électrochimiques (16) de part et d'autre de celles-ci suivant une direction (Y) selon laquelle l'épaisseur du boîtier (11) est comptée.

5. Appareil de chauffage (1) selon la revendication 4, **caractérisé en ce que** le flux d'air (3b) qui circule de ladite au moins une admission d'air (13, 15) vers ledit au moins un organe de chauffe (12) circule dans l'intervalle délimité entre et par lesdites deux plaques opposées.

6. Appareil de chauffage (1) selon l'une quelconque des revendications 3 à 5, **caractérisé en ce que** les cellules électrochimiques (16) sont en contact thermique direct avec le flux d'air (3b) qui circule de ladite au moins une admission d'air (13, 15) vers ledit au moins un organe de chauffe (12).

7. Appareil de chauffage (1) selon l'une quelconque des revendications 1 à 6, **caractérisé en ce que** le boîtier (11) et le dispositif de stockage d'énergie électrique (2) délimitent respectivement des premiers éléments et des seconds éléments d'un même système de fixation assurant le maintien du dispositif de stockage d'énergie électrique (2) audit emplacement par rapport au boîtier (11).

8. Appareil de chauffage (1) selon l'une quelconque des revendications 1 à 7, **caractérisé en ce que** le flux d'air (3b) circule par effet de convection naturelle dans le boîtier (11).

## Patentansprüche

1. Heizgerät (1) in der Art eines elektrischen Radiators, der ein Gehäuse (11) aufweist, das einerseits eine Vorrichtung zum Speichern elektrischer Energie (2) einschließt, die unter einem Gleichstrom betrieben wird, dazu bestimmt, durch eine Stromversorgungsquelle außerhalb des Gerätes (1) aufgeladen zu werden, andererseits mindestens ein Heizorgan (12), das durch die Stromversorgungsquelle und/oder durch die Vorrichtung zum Speichern elektrischer Energie (2) mit Strom versorgt werden kann, wobei das Gehäuse (11) mindestens einen Lufteinlass (13, 15) umfasst, der in einem unteren Teil des Gehäuses (11) angeordnet ist, um es zu ermöglichen, dass Luft in das Volumen eintritt, das innen durch das Gehäuse (11) begrenzt wird, und mindestens einen Luftauslass (14), der in einem oberen Teil des Gehäuses (11) angeordnet ist, um es zu ermöglichen, dass die Luft aus dem Volumen austritt, **dadurch gekennzeichnet, dass** die Vorrichtung zum Speichern elektrischer Energie (2) quer zum Luftstrom (3b), der in dem Volumen von dem mindestens einen Lufteinlass (13, 15) zum mindestens einen Luftauslass (14) zirkuliert, an einer Stelle eingesetzt ist, die sich, in der Zirkulationsrichtung des Stroms (3b) gesehen, zwischen einerseits dem mindestens einen Lufteinlass (13, 15) und andererseits dem mindestens einen Heizorgan (12) befindet.

2. Heizgerät (1) nach Anspruch 1, **dadurch gekennzeichnet, dass** der mindestens eine Lufteinlass (13, 15) eine Öffnung (15) umfasst, die in der Rückseite des Gehäuses (11) eingearbeitet ist.

3. Heizgerät (1) nach einem der Ansprüche 1 oder 2, **dadurch gekennzeichnet, dass** die Vorrichtung zum Speichern elektrischer Energie (2) eine Batterie auf Grundlage einer Zusammensetzung von elektrochemischen Zellen (16) umfasst.

4. Heizgerät (1) nach Anspruch 3, **dadurch gekennzeichnet, dass** das Gehäuse (11) zwei gegenüberliegende Platten einschließt, die die elektrochemischen Zellen (16) beiderseits derselben in einer Richtung (Y) einrahmen, in der die Dicke des Gehäuses (11) betrachtet wird.

5. Heizgerät (1) nach Anspruch 4, **dadurch gekennzeichnet, dass** der Luftstrom (3b), der von dem mindestens einen Lufteinlass (13, 15) zu dem mindestens einen Heizorgan (12) zirkuliert, in dem Intervall zirkuliert, das zwischen den und durch die beiden gegenüberliegenden Platten begrenzt wird.

6. Heizgerät (1) nach einem der Ansprüche 3 bis 5, **dadurch gekennzeichnet, dass** die elektrochemischen Zellen (16) in direktem Wärmekontakt mit dem Luftstrom (3b) sind, der von dem mindestens einen Lufteinlass (13, 15) zu dem mindestens einen Heizorgan (12) zirkuliert.

7. Heizgerät (1) nach einem der Ansprüche 1 bis 6, **dadurch gekennzeichnet, dass** das Gehäuse (11) und die Vorrichtung zum Speichern elektrischer Energie (2) jeweils erste Elemente und zweite Elemente eines selben Befestigungssystems begrenzen, das für den Halt der Vorrichtung zum Speichern elektrischer Energie (2) an der Stelle in Bezug auf das Gehäuse (11) sorgt.

8. Heizgerät (1) nach einem der Ansprüche 1 bis 7, **dadurch gekennzeichnet, dass** der Luftstrom (3b) durch natürliche Konvektionswirkung in dem Gehäuse (11) zirkuliert.

## Claims

1. An electric radiator-type heating apparatus (1) having a housing (11) enclosing, on the one hand, an electric energy storage device (2) operating under a direct current intended to be charged by an electric power source external to the apparatus (1), on the other hand, at least one heating member (12) which may be supplied with electricity by the electric power source and/or by the electric energy storage device (2), the housing (11) comprising at least one air inlet (13, 15) arranged in a lower part of the housing (11) to allow air to enter the volume delimited internally by the housing (11) and at least one air outlet (14) arranged in an upper part of the housing (11) to allow air to exit from said volume, **characterized in that** the electric energy storage device (2) is implanted across the air flow (3b) which flows, in said volume, from said at least one air inlet (13, 15) to said at least one air outlet (14), at a location situated, seen in the direction of said flow (3b), between, on the one hand, said at least one air inlet (13, 15) and, on the other hand, said at least one heating member (12).

2. The heating apparatus (1) according to claim 1, **characterized in that** said at least one air inlet (13, 15) comprises an opening (15) formed in the rear face of the housing (11).

3. The heating apparatus (1) according to any one of claims 1 or 2, **characterized in that** the electric energy storage device (2) comprises an electrochemical cells (16) assembly-based battery.

4. The heating apparatus (1) according to claim 3, **characterized in that** the housing (11) encloses two opposite plates sandwiching the electrochemical cells (16) on either side thereof in a direction (Y) along which the thickness of the housing (11) is counted.

5. The heating apparatus (1) according to claim 4, **characterized in that** the air flow (3b) which flows from said at least one air inlet (13, 15) to said at least one heating member (12) flows in the interval delimited between and by said two opposite plates.

6. The heating apparatus (1) according to any one of claims 3 to 5, **characterized in that** the electrochemical cells (16) are in direct thermal contact with the air flow (3b) which flows from said at least one air inlet (13, 15) to said at least one heating member (12).

7. The heating apparatus (1) according to any one of claims 1 to 6, **characterized in that** the housing (11) and the electric energy storage device (2) respectively delimit first elements and second elements of a same fastening system ensuring the maintenance of the electric energy storage device (2) at said location relative to the housing (11).

8. The heating apparatus (1) according to any one of claims 1 to 7, **characterized in that** the air flow (3b) flows by natural convection effect in the housing (11).
